# EUROPÄISCHE PATENTSCHRIFT

(11) **EP 0 901 207 B1**
(45) Veröffentlichungstag und Bekanntmachung des Hinweises auf die Patenterteilung: **06.11.2002**
(21) Anmeldenummer: 98114996.6
(22) Anmeldetag: 10.08.1998
(51) Int. Cl.: H02B 1/32

(54) **Schaltschrank**
Switchgear cabinet
Armoire de distribution

(30) Priorität: 28.08.1997 DE 19737489
(43) Veröffentlichungstag der Anmeldung: 10.03.1999
(73) Patentinhaber: Rittal-Werk Rudolf Loh GmbH & Co. KG, 35745 Herborn (DE)
(72) Erfinder: Root, Paul, 35080 Bad Endbach (DE); Köhler, Martina, 35745 Herborn (DE); Reuter, Wolfgang, 57299 Burbach (DE)
(74) Vertreter: Fleck, Hermann-Josef, Dr.-Ing.

(56) Entgegenhaltungen:
- DE-A- 1 465 775
- DE-A- 4 312 487
- DE-U- 8 432 766
- DE-U- 8 701 711
- DE-U- 29 509 556

## Beschreibung

Die Erfindung betrifft einen Schaltschrank mit einem aus Rahmenschenkel zusammengesetzten Rahmengestell und mit einer parallel zur Rückwand am Rahmengestell befestigbaren Montageplatte, wobei an unteren horizontalen Tiefenstreben des Rahmengestelles Halterungen festlegbar sind, die die Montageplatte im Bereich ihres unteren horizontalen Rands tragen, wobei die Tiefenstreben zwei im Winkel zueinanderstehende, zum Innenraum des Rahmengestelles gerichtete Profilseiten aufweisen, wobei die Halterung einen Grundkörper aufweist, der in Richtung zum Innenraum des Rahmengestelles mittels eines Halteansatzes verlängert ist, der die Montageplatte trägt, und wobei an den auskragenden Halteansatz wenigstens ein Stützabschnitt angeschlossen ist, der sich an der zweiten Profilseite abstützt.

Ein derartiger Schaltschrank ist aus der DE 295 095 561 U1 bekannt. Bei diesem Schaltschrank sind bodenseitig zwei in Richtung der Schranktiefe verlaufende Gleitschienen verwendet. Auf diese kann die Montageplatte mit einem Gleitstück aufgesetzt werden. Im rückwärtigen Schrankbereich sind an den Tiefenstreben zwei Halterungen festgemacht. Diese weisen eine nach oben abstehende Nase auf, die in eine Ausnehmung der aufgerichteten Montageplatte eingrieft. Die Nase verhindert, dass sich die Montageplatte unbeabsichtigt verschiebt.

In der DE 84 34 766 U1 ist eine Anordnung beschrieben, bei der eine Montageplatte an ihrem unteren horizontalen Rand schwenkbar gelagert ist. Hierzu sind Halterungen verwendet, die sich auf Profilschienen abstützen.

Ein weiterer Schaltschrank ist beispielsweise aus der DE 84 18 270 U1 bekannt. Hierbei sind an dem unteren horizontalen Rand der Montageplatte Führungsstücke angebracht. Mit den Führungsstücken ist die Montageplatte auf Führungsschienen aufgesetzt. Die Führungsschienen sind mit den Tiefenstreben verbunden und verlaufen ebenfalls in Richtung der Schaltschranktiefe. Die Montageplatte kann auf den Führungsschienen in Richtung der Tiefe des Schaltschrankes verschoben werden. Zur Fixierung der Montageplatte in ihrer Bestimmungsposition dienen die beiden Halterungen, die an den Tiefenstreben festgemacht werden können. Diese Halterungen sind laschenartig als Stanz-Biegeteile ausgebildet und aus Stahlblech gefertigt. Die Halterungen sind einseitig an den Tiefenstreben festgeschraubt. An ihren freien Enden kragen sie in Richtung zum Innenraum des Schaltschrankes aus.

Es ist Aufgabe der Erfindung, einen Schaltschrank der eingangs erwähnten Art zu schaffen, bei dem eine Montageplatte sicher abgestützt werden kann.

Diese Aufgabe wird dadurch gelöst, dass die Halterung auf der horizontalen und senkrecht zur zugeordneten Seite des Schaltschrankes verlaufenden ersten Profilseite mit dem Grundkörper abgestützt und hieran befestigt ist,
dass der Halteansatz eine Ausnehmung aufweist, in die ein Zapfen eines im Bereich des unteren Randes der Montageplatte angebrachten Führungsstückes eingreift, und dass der Zapfen in seiner Querschnittsgeometrie auf die freie Öffnungsfläche der Ausnehmung angepasst ausgebildet ist. Die von der Montageplatte in den Halteansatz eingeleiteten Kräfte können über die Halteansätze aufgenommen und in die Stützabschnitte weitergeleitet werden. Die Stützabschnitte wiederum übertragen diese Kräfte in die Tiefenstreben. Da nun auch der Grundkörper der Halterungen an den Tiefenstreben befestigt ist, lassen sich geschlossene Kräftekreisläufe schaffen, mit denen hohe Belastungen aufgenommen werden können. Dies ermöglicht die sichere Abstützung von Montageplatten.

Dadurch, dass der Zapfen die Anbringung an dem Führungsstück angebracht ist, wird eine einfache und schnelle Fixierung der Montageplatte an der Halterung möglich. Insbesondere wirkt der Zapfen dann nicht störend, wenn die Montageplatte in Richtung der Tiefe des Schaltschrankes auf einer Gleitschiene verschoben wird.

Zur Montagevereinfachung kann es vorgesehen sein, dass die den Grundkörper der Halterung aufnehmende erste Profilseite mit wengistens einer Reihe von in gleicher Teilung zueinander beabstandete Befestigungsaufnahmen versehen ist, an denen der Grundkörper mit einem Fixierhaken festlegbar ist. Zur Fixierung der Halterung ist es damit lediglich erforderlich, den Fixierhaken mit den Befestigungsaufnahmen zu verspannen. Die alleinige Verwendung des Fixierhakens ist dann ausreichend, wenn der Schaltschrank an einem fest vorgegebenen Ort aufgestellt ist. Soll ein Transport des Schaltschrankes an einen anderen Ort erfolgen, so kann zusätzlich eine Schraubverbindung vorgesehen werden.

Bevorzugt ist es vorgesehen, dass der Fixierhaken von dem plattenförmigen Grundkörper rechtwinklig abgebogen ist und einen geöffneten Schlitz aufweist, dessen Öffnungsweite auf die Materialstärke der ersten Profilseite abgestimmt ausgebildet ist.

Eine Ausgestaltungsvariante der Erfindung ist dadurch gekennzeichnet, daß der Grundkörper mit Befestigungsbohrungen versehen ist, die fluchtend zu Befestigungsaufnahmen angeordnet sind, und daß in die Befestigungsbohrungen selbstschneidende Schrauben einführbar und in die Befestigungsaufnahmen eindrehbar sind, wobei sie in die Befestigungsaufnahmen ein Gewinde einschneiden. Die in dem Schaltschrank angeordnete Montageplatte ist auch an ihrem oberen horizontalen Randbereich zu fixieren. Hierzu sieht die Erfindung vor, daß an den oberen horizontalen Tiefenstreben des Rahmengestelles Befestigungen angebracht sind, an denen die Montageplatte im Bereich ihres oberen horizontalen Randes gehalten ist, daß die Befestigung einen Rastansatz aufweist, an dem die Montageplatte verrastbar ist, und daß die Montageplatte mittels einer Schraubverbindung mit der Befestigung verschraubbar ist. Mittels der Rastverbindung kann die Montageplatte vorläufig fixiert werden. Einem Monteur stehen nun beide Hände zur Verfügung um die abschließende Verschraubung der Montageplatte zu bewerkstelligen.

Die Erfindung wird im folgenden anhand eines in den Zeichnungen dargestellten Ausführungsbeispieles näher erläutert. Es zeigen:
- Fig. 1: in perspektivischer Darstellung ein Rahmengestell eines Schaltschrankes mit einer darin montierten vertikalen Montageplatte,
- Fig. 2: als vergrößerte Detailzeichnung und Explosionsdarstellung einen Ausschnitt im unteren Bereich des Rahmengestelles,
- Fig. 3: als vergrößerte Detailzeichnung und Explosionsdarstellung einen oberen Bereich des Rahmengestelles und
- Fig. 4: in Seitenansicht eine in Fig. 3 gezeigte Befestigung.

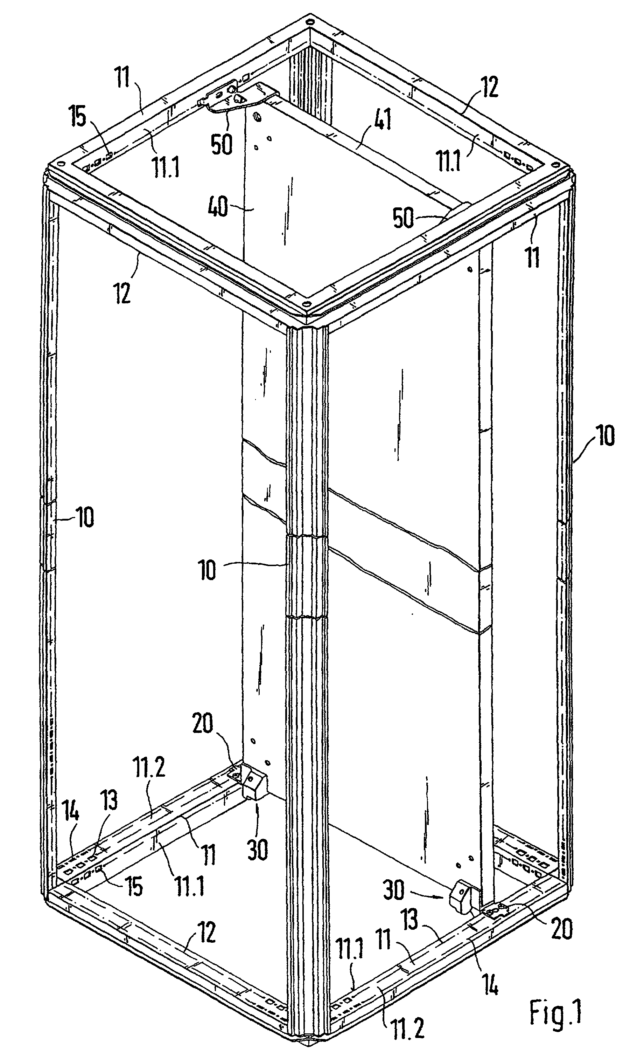

In der Fig.1 ist ein Rahmengestell eines Schaltschrankes dargestellt. Das Rahmengestell weist vier vertikale Rahmenprofile 10 auf, die an ihren stirnseitigen Enden über einen Boden- bzw. einen Deckrahmen in Verbindung stehen. Der Boden- bzw. der Deckrahmen ist aus horizontalen Tiefen- und Breitenstreben 11, 12 zusammengesetzt. Die Tiefen- und Breitenstreben 11, 12 sind als Profilabschnitte ausgebildet und weisen zwei, im rechten Winkel zueinanderstehende Profilseiten 11.1, 11.2 auf. Die Profilseiten 11.1, 11.2 sind mit Reihen von Befestigungsaufnahmen 13, 14 und 15 versehen. Die Befestigungsaufnahmen 13, 14 und 15 sind dabei zueinander in Teilungsabstand angeordnet. Die erste Profilseite 11.2 ist mit zwei Reihen von Befestigungsaufnahmen 13, 14 versehen, während die zweite Profilseite 11.1 lediglich eine Reihe von Befestigungsaufnahmen 15 aufweist.

An den Tiefenstreben 11 des Boden- bzw. Deckrahmens läßt sich eine Montageplatte 40 befestigen. Zur Befestigung sind am unteren horizontalen Rand der Montageplatte 40 Führungsstücke 30 und Halterungen 20 angeordnet. Am oberen horizontalen Rand der Montageplatte sind Befestigungen 50 verwendet. Wie der Fig. 1 entnommen werden kann, besitzt die Montageplatte 40 eine ebene Frontfläche, von der rechtwinklig eine Abkantung 41 abgebogen ist.

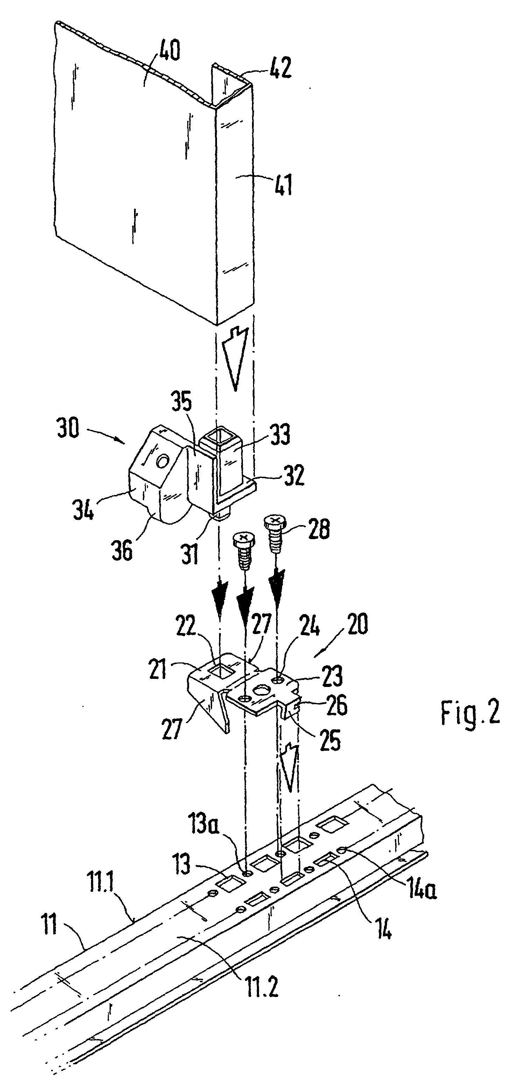

In der Fig. 2 ist eine vergrößerte Detailansicht des unteren Befestigungsbereiches der Montageplatte 40 in Explosionsdarstellung gezeigt. Wie dieser Darstellung entnommen werden kann, ist von der Abkantung 41 ein Schenkel 42 rechtwinklig abgebogen. Der Schenkel 42 steht parallel zu der durch die Montageplatte 40 bestimmte Ebene. Damit ergibt sich eine U-förmige Aufnahme zwischen der Montageplatte 40, der Abkantung 41 und dem Schenkel 42. In diese Aufnahme kann ein Ansatz 33 des Führungsstückes 30 eingesteckt werden. Die Einsteckbewegung des Ansatzes 33 in die Aufnahme wird mit dem plattenförmigen Auflager 32 begrenzt. An das plattenförmige Auflager 32 ist einstückig eine Wand 35 angebunden, die parallel zu dem Ansatz 33 steht. Dabei ist der Abstand zwischen dem Ansatz 33 und der Wand 35 so gewählt, daß das Führungsstück 30 an der Montageplatte 40 geklemmt gehalten ist. Die Wand 35 trägt einen Gleitfuß 34. Das Führungsstück 30 kann mit seinem Gleitfuß 34 auf einer Führungsschiene verschoben werden. Die Führungsschiene ist aus Gründen der Übersichtlichkeit in der Fig. 2 nicht dargestellt. Seitlich schließt sich an den Gleitfuß 34 ein Anschlag 36 an, der an einer seitlichen Führung der Führungsschiene entlang geführt werden kann. Wie die Fig. 1 zeigt, sind zwei Führungsstücke 30 verwendet, an denen die Montageplatte 40 in Richtung der Schranktiefe verschoben werden kann.

Zurückkommend auf Fig. 2 kann man erkennen, daß an das Auflager 32 ein Zapfen 31 angebunden ist, der nach unten absteht. Der Zapfen 31 dient zur Fixierung der Montageplatte 40 an der Halterung 20. Hierzu weist die Halterung 20 einen Halteansatz 21 auf, der mit einer Ausnehmung 22 versehen ist. Die freie Querschnittsfläche der Ausnehmung 22 ist dabei auf die Außengeometrie des Zapfens 31 angepaßt ausgebildet. Um den Zapfen 31 mit der Ausnehmung 22 in Eingriff bringen zu können, muß die Montageplatte 40 nach vorne abgekippt werden. In dieser Stellung stützt sie sich über den Gleitfuß 34 auf der Führungsschiene ab. Wird die Montageplatte 40 in ihre vertikale Endlage aufgerichtet, so greift der Zapfen 31 in die Ausnehmung 22 ein. Um dies zu erleichtern, ist der Zapfen 31 an seinem freien Ende angefast.

An den Halteansatz 21 ist ein Grundkörper 23 angeschlossen, der einen Fixierhaken 25 trägt. Der Fixierhaken 25 ist von dem Grundkörper 23 rechtwinklig nach unten abgebogen. Er ist mit einem geöffneten Schlitz 26 versehen, der in seiner lichten Öffnungsweite auf die Blechstärke der ersten Profilseite 11.1 angepaßt ausgebildet ist. Von dem Halteansatz 21 sind weiterhin zwei Stützabschnitte 27 abgekantet. Zur Festlegung der Halterung 20 an der Tiefenstrebe 11 wird zunächst der Grundkörper 23 auf die erste Profilseite 11.2 aufgesetzt. Dabei durchgreift der Fixierhaken 25 eine der schlitzförmigen Befestigungsaufnahmen 14. Infolge einer Verschiebung der Halterung 20 in Richtung auf das rückwertige Ende der Tiefenstrebe 11 umgreift der Schlitz 26 des Fixierhakens 25 die erste Profilseite 11.2 im Anschluß an die Befestigungsaufnahme 14. In dieser Montageposition sind Befestigungsbohrungen 14, die in den Grundkörper 23 eingebracht sind in Deckung mit Befestigungsaufnahmen 13a der ersten Profilseite 11.2. Diese Befestigungsaufnahmen 13a sind als kreisrunde Ausstanzungen ausgebildet. In die Befestigungsbohrungen 24 können Schrauben 28 eingeführt und in die Befestigungsaufnahmen 13a eingeschraubt werden. Dabei schneiden sich die Schrauben 28 in die Befestigungsaufnahmen 13a ein Ge-winde ein. Bei der so montierten Halterung 20 stützen sich die Stützabschnitte 27 auf der zweiten Profilseite 11.1 ab. Über die Stützabschnitte 27 kann die Schwerkraft, welche über die Montageplatte eingebracht wird, aufgenommen und sicher in die Tiefenstrebe 11 abgeleitet werden.

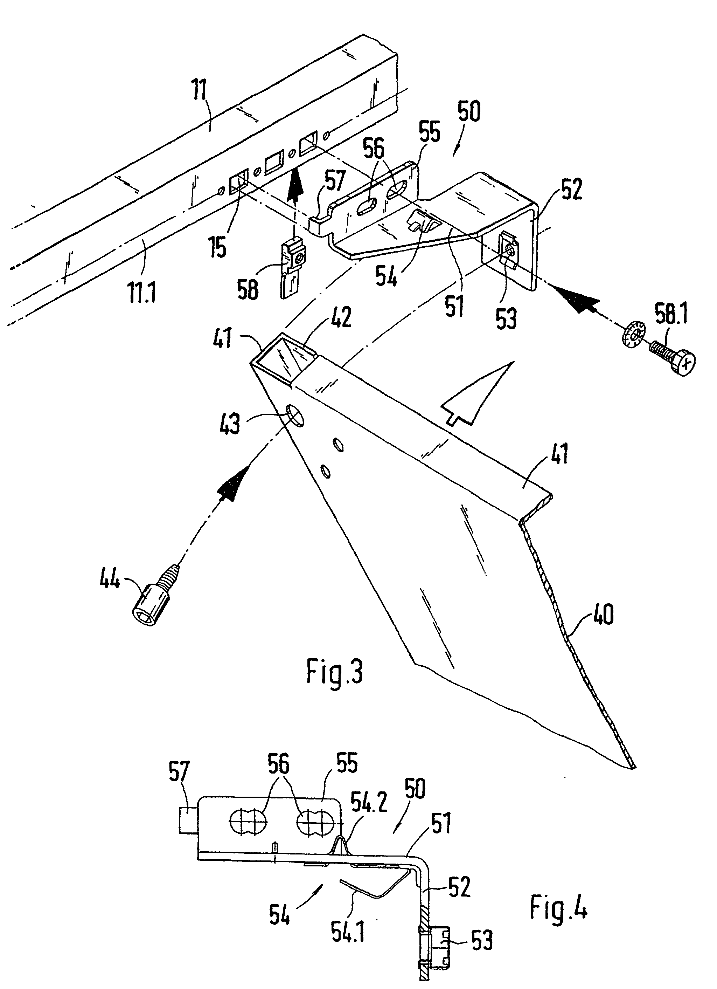

In der Fig. 3 ist in Explosionsdarstellung der obere Randbereich der Montageplatte 40 dargestellt. Zur Befestigung dieses oberen horizontalen Randbereiches sind Befestigungen 50 verwendet. Dabei ist jeweils eine Befestigung 50 an der oberen horizontalen Tiefenstrebe 11 festgemacht. Die Befestigung 50 weist zwei im rechten Winkel zueinanderstehende Schenkel 51, 52 auf. Der Schenkel 52 ist mit einem Durchbruch versehen, in den eine Käfigmutter 53 eingesetzt ist. Der Schenkel 51 trägt ein Fixierelement 54, daß der Fig. 4 näher entnommen werden kann. Von dem Schenkel 52 ist eine Abwinklung 55 rechtwinklig abgebogen. Die Abwinklung 55 ist mit zwei Durchbrechungen 56 versehen. Desweiteren trägt die Abwinklung 55 einen Haken 57.

Zur Anbringung der Befestigung 50 an der Tiefenstrebe 11 wird die Abwinklung 55 flächig auf die Profilseite 11.1 aufgelegt. Dabei fluchten die Befestigungsaufnahmen 56 der Abwinklung 55 mit den Befestigungsaufnahmen 15 der Tiefenstrebe 11. Die Ausrichtung der Befestigungsaufnahmen 56 auf die Befestigungsaufnahmen 15 wird dabei durch den Haken 57 erleichtert, der in eine benachbarte Befestigungsaufnahme 15 der Tiefenstrebe 11 eingreift. Wie in der Fig. 3 angedeutet ist, kann die Befestigung 50 mittels einer Mutter 58 und einer Schraube 58.1 an der Tiefenstrebe 11 angeschraubt werden.

In der Fig.4 ist die Befestigung 50 in Seitenansicht dargestellt. Wie sich aus dieser Zeichnung entnehmen läßt, weist das Fixierelement 54 eine Verrastung 54.2 auf, mit der sie an dem Schenkel 51 festgemacht ist. Desweiteren trägt das Fixierelement 54 einen Rastansatz 54.1. Der Rastansatz 54.1 weist eine, zur Vorderseite des Schaltschrankes hin geneigte Auslenkschräge auf, die in eine Rastflanke übergeht.

Wie die Fig. 3 erkennen läßt, läßt sich die Montageplatte 40 um ihren unteren horizontalen Rand schwenken. Infolge dieser Schwenkbewegung trifft der Schenkel 42 der Montageplatte 40 auf die Auslenkschräge des Fixierelementes 54. Die Auslenkschräge weicht gegenüber dem Schenkel 42 zurück. Wenn der Schenkel 42 die Auslenkschräge pasiert hat, wird dieser mit der Rastflanke des Fixierelementes 54 hintergriffen. Mittels des Fixierelementes 54 und der Befestigung 50 kann die Montageplatte zunächst in ihrer vertikalen Position gehalten werden. Um eine abschließende und sichere Befestigung herbeizuführen, sind in die Schenkel 42 Bohrungen eingebracht, die von der Frontseite der Montageplatte 40 her durch einen Durchbruch 43 zugänglich sind. Durch den Durchbruch 43 kann eine Schraube 44 eingeführt und in die Bohrung des Schenkels 42 eingesteckt werden. Die Schraube 44 läßt sich in die Käfigmutter 53 einschrauben.

## Patentansprüche

1. Schaltschrank mit einem aus Rahmenschenkeln (10, 11, 12) zusammengesetzten Rahmengestell und mit einer parallel zur Rückwand am Rahmengestell befestigbaren Montageplatte (40), wobei an unteren horizontalen Tiefenstreben des Rahmengestelles Halterungen (20) festlegbar sind, die die Montageplatte (40) im Bereich ihres unteren horizontalen Rands tragen, wobei die Tiefenstreben zwei im Winkel zueinanderstehende, zum Innenraum des Rahmengestelles gerichtete Profilseiten (11.2, 11.1) aufweisen, wobei die Halterung (20) einen Grundkörper (23) aufweist, der in Richtung zum Innenraum des Rahmengestelles mittels eines Halteansatzes (21) verlängert ist, der die Montageplatte (40) trägt, und wobei an den auskragenden Halteansatz (21) wenigstens ein Stützabschnitt (27) angeschlossen ist, der sich an der zweiten Profilseite (11.1) abstützt,
**dadurch gekennzeichnet,**
**dass** die Halterung (20) auf der horizontalen und senkrecht zur zugeordneten Seite des Schaltschrankes verlaufenden ersten Profilseite (11.1) mit dem Grundkörper (23) abgestützt und hieran befestigt ist,
**dass** der Halteansatz (21) eine Ausnehmung (22) aufweist, in die ein Zapfen (31) eines im Bereich des unteren Randes der Montageplatte (40) angebrachten Führungsstückes (30) eingreift, und
**dass** der Zapfen (31) in seiner Querschnittsgeometrie auf die freie Öffnungsfläche der Ausnehmung (22) angepasst ausgebildet ist.

2. Schaltschrank nach Anspruch 1,
**dadurch gekennzeichnet,**
**dass** die den Grundkörper (23) der Halterung (20) aufnehmende erste Profilseite (11.2) mit wenigstens einer Reihe von in gleicher Teilung zueinander beabstandeten Befestigungsaufnahmen (14, 14a, 13, 13a) versehen ist, an denen der Grundkörper (23) mit einem Fixierhaken (25) festlegbar ist.

3. Schaltschrank nach Anspruch 2,
**dadurch gekennzeichnet,**
**dass** der Fixierhaken (25) von dem plattenförmigen Grundkörper (23) rechtwinklig abgebogen ist und einen geöffneten Schlitz (26) aufweist, dessen Öffnungsweite auf die Materialstärke der ersten Profilseite (11.2) abgestimmt ausgebildet ist.

4. Schaltschrank nach einem der Ansprüche 1 bis 3,
**dadurch gekennzeichnet,**
**dass** der Grundkörper (23) mit Befestigungsbohrungen (24) versehen ist, die fluchtend zu ebenfalls als Bohrungen ausgebildeten Befestigungsaufnahmen (13a) angeordnet sind, und
**dass** in die Befestigungsbohrungen (24) selbstschneidende Schrauben (28) einführbar und in die Befestigungsaufnahmen (13a) eindrehbar sind, wobei sie in die Befestigungsaufnahmen (13a) ein Gewinde einschneiden.

5. Schaltschrank nach einem der Ansprüche 1 bis 4,
**dadurch gekennzeichnet,**
**dass** an den oberen horizontalen Tiefenstreben (11) des Rahmengestelles Befestigungen (50) angebracht sind, an denen die Montageplatte (40) im Bereich ihres oberen horizontalen Randes fixierbar ist,
**dass** die Befestigung (50) einen Rastansatz (54.1) aufweist, an dem die Montageplatte (40) verrastbar ist, und
**dass** die Montageplatte (40) mittels einer Schraubverbindung (Schraube 44, Käfigmutter 53) mit der Befestigung (50) verschraubbar ist.

## Claims

1. Switch cabinet with a framework made up of frame legs (10, 11, 12), and with an installation panel (40) which can be fastened on the framework parallel to the rear wall, it being the case that securing means (20) can be secured on bottom horizontal depthwise struts of the framework and bear the installation panel (40) in the region of its bottom horizontal border, that the depthwise struts have two profile sides (11.2, 11.1) which are located at an angle to one another and are directed towards the interior of the framework, that the securing means (20) have a basic body (23), which is extended in the direction of the interior of the framework by means of a retaining extension (21) which bears the installation panel (40), and that the projecting retaining extension (21) is adjoined by at least one supporting section (27), which is supported on the second profile side (11.1), **characterized in that** the securing means (20) is supported, and fastened, on the first, horizontal profile side (11.1), which runs perpendicularly to the associated side of the switch cabinet, by way of the basic body (23), **in that** the retaining extension (21) has a cutout (22), in which a stub (31) of a guide element (30), which is fitted in the region of the bottom border of the installation panel (40), engages, and **in that** the stub (31) is adapted, in its cross-sectional geometry, to the free surface area of the opening of the cutout (22).

2. Switch cabinet according to Claim 1, **characterized in that** the first profile side (11.2), which accommodates the basic body (23) of the securing means (20), is provided with at least one row of equally spaced-apart fastening mounts (14, 14a, 13, 13a), on which the basic body (23) can be secured by a fixing hook (25).

3. Switch cabinet according to Claim 2, **characterized in that** the fixing hook (25) is bent at right angles from the plate-like basic body (23) and has an open slit (26), the opening extent of which is coordinated with the material thickness of the first profile side (11.2).

4. Switch cabinet according to one of Claims 1 to 3, **characterized in that** the basic body (23) is provided with fastening bores (24) which are arranged in alignment with fastening mounts (13a), which are likewise designed as bores, and **in that** self-tapping screws (28) can be introduced into the fastening bores (24) and screwed into the fastening mounts (13a), in which case they cut a thread into the fastening mount (13a).

5. Switch cabinet according to one of Claims 1 to 4, **characterized in that** fastenings (50) are fitted on the top horizontal depthwise struts (11) of the framework, and the installation panel (40) can be fixed on said fastenings in the region of its top horizontal border, **in that** the fastening (50) has a latching extension (54.1), to which the installation panel (40) can be latched, and **in that** the installation panel (40) can be screwed to the fastening (50) by means of a screw connection (screw 44, cage nut 53).

## Revendications

1. Armoire de distribution comprenant une baie composée de montants de cadre (10, 11, 12) et d'une plaque de montage (40) pouvant être fixée sur la baie parallèlement à la paroi arrière, des attaches (20) qui portent la plaque de montage (40) au niveau de son bord horizontal inférieur pouvant être positionnées sur les tirants de profondeur horizontaux de la baie, les tirants de profondeur présentant deux côtés profilés (11.2, 11.1) qui forment un angle l'un par rapport à l'autre et dirigés vers l'intérieur de la baie, l'attache (20) présentant un corps de base (23) qui est prolongé en direction de l'intérieur de la baie au moyen d'un talon de maintien (21) qui porte la plaque de montage (40), et au moins une section support (27) qui vient s'appuyer sur le deuxième côté profilé (11.1) étant raccordée au talon de maintien (21) en saillie, **caractérisée en ce que** l'attache (20) est soutenue par le corps de base (23) et y est fixée sur le premier côté profilé (11.2) horizontal et s'étendant perpendiculairement au côté associé de l'armoire de distribution, que le talon de maintien (21) présente un creux (22) dans lequel pénètre un tenon (31) d'une pièce de guidage (30) qui se trouve au niveau du bord inférieur de la plaque de montage (40), et que le tenon (31) présente une forme géométrique de section adaptée à la surface d'ouverture libre du creux (22).

2. Armoire de distribution selon la revendication 1, **caractérisée en ce que** le premier côté profilé (11.2) qui reçoit le corps de base (23) de l'attache (20) est muni d'au moins une rangée de logements de fixation (14, 14a, 13, 13a) écartés les uns des autres à intervalles réguliers et dans lesquels le corps de base (23) peut être positionné avec un crochet de fixation (25).

3. Armoire de distribution selon la revendication 2, **caractérisée en ce que** le crochet de fixation (25) est coudé en angle droit par rapport au corps de base en forme de plaque (23) et présente une fente ouverte (26) dont la largeur d'ouverture est adaptée à l'épaisseur de matériau du premier côté profilé (11.2).

4. Armoire de distribution selon l'une des revendications 1 à 3, **caractérisée en ce que** le corps de base (23) est muni d'orifices de fixation (24) qui sont disposés dans l'alignement des logements de fixation (13a) également réalisés sous la forme d'orifices, et que des vis auto-taraudeuses (28) peuvent être vissées dans les orifices de fixation (24) et dans les logements de fixation (13a) en pratiquant alors un filet dans les logements de fixation (13a).

5. Armoire de distribution selon l'une des revendications 1 à 4, **caractérisée en ce que** des éléments de fixation (50) sur lesquels la plaque de montage (40) peut être fixée au niveau de son bord horizontal supérieur sont montés au niveau des tirants de profondeur horizontaux (11) de la baie, que l'élément de fixation (50) présente un talon d'enclipsage (54.1) sur lequel peut venir s'enclipser la plaque de montage (40), et que la plaque de montage (40) peut être vissée à l'aide d'une liaison vissée (vis 44, écrou à cage 53) avec l'élément de fixation (50).
